Europäisches Patentamt

European Patent Office

Office européen des brevets

(11) Veröffentlichungsnummer: **0 332 958**
**A1**

(12) **EUROPÄISCHE PATENTANMELDUNG**

(21) Anmeldenummer: **89103828.3**

(22) Anmeldetag: **04.03.89**

(51) Int. Cl.⁴: **B09B 5/00 , B03D 1/00 , B09B 3/00**

(30) Priorität: **12.03.88 DE 3808370**

(43) Veröffentlichungstag der Anmeldung: **20.09.89 Patentblatt 89/38**

(84) Benannte Vertragsstaaten: **AT BE CH DE FR GB LI LU NL SE**

(71) Anmelder: **Pahl, Ekke, Dipl.-Ing.**
**Schloostrasse 2**
**D-2103 Hamburg 95(DE)**

(72) Erfinder: **Eberius, Ernst, Dr.**
**Im Linsenbühl 13**
**D-6915 Dossenheim(DE)**

(74) Vertreter: **Niedmers, Ole, Dipl.-Phys. et al**
**Patentanwälte Niedmers & Schöning**
**Jessenstrasse 4**
**D-2000 Hamburg 50(DE)**

(54) **Verfahren zur Dekontaminierung schlammartiger Sedimente.**

(57) Die Erfindung betrifft ein Verfahren zur Dekontamination von toxische Metallverbindungen enthaltenden schlammartigen Sedimenten, das dadurch gekennzeichnet, daß man die Sedimente mit Agenzien versetzt, welche die Metallverbindungen zumindest teilweise hydrophobieren und somit flotierbar machen und daß man die Metallverbindungen in flotationsüblicher Weise in einem Verfahrensschritt von den Sedimenten trennt und als Konzentrat abzieht.

EP 0 332 958 A1

## Verfahren zur Dekontaminierung schlammartiger Sedimente

Die Erfindung betrifft ein Verfahren zur Dekontaminierung von toxische Metallverbindungen enthaltenden, schlammartigen Sedimenten.

Von den jährlich in Millionenhöhe anfallenden Kubikmetern natürlicher, industrieller und kommunaler Schlämme ist ein beträchtlicher Anteil derart durch toxische Metallverbindungen kontaminiert, daß diese Sedimente weder landwirtschaftlich noch landbaulich genutzt werden können.

Derartige kontaminierte Sedimente werden derzeit auf geeigneten Großflächen deponiert. In absehbarer Zeit werden derartige Großflächen jedoch nicht mehr zur Verfügung stehen, denn das aus diesen Deponien austretende, schwermetallhaltige Sickerwasser bedroht das Grundwasser und ist gefährlich für die Landwirtschaft oder gärtnerisch genutzte Umgebung sowie für bestehende oder geplante Siedlungen.

Es wird daher derzeit versucht, die Basis mit Kunststoffolien abzudichten. Dies ist mit einem enormen Aufwand verbunden. Zudem kann zwar, sofern die Folie nicht beschädigt ist oder verrottet, die Vergiftung des Bodens unmittelbar unter der Deponie verhindert werden, allerdings ist es nicht möglich, das Austreten der belasteten Sickerwässer in die Randbereiche zu unterbinden.

Die Kontamination verhindert auch eine ökonomisch vertretbare Rekultivierung, da sich die Schadstoffe in den Nutzpflanzen anreichern.

Die von einer solchen Deponie ausgehenden schädlichen Auswirkungen sind daher nur dadurch zu verhindern, daß man den Gehalt an toxischen Metallen vor dem Deponieren bis zu einem die Umwelt und die Ökologie nicht mehr beeinträchtigenden Wert reduziert.

Bisher ist nur ein Verfahren zum Dekontaminieren von Schlämmen und Schlick bekannt. Bei diesem in der europäischen Patentschrift 0072885 beschriebenen Verfahren werden Schlämme und Schlick mit Salzsäure extrahiert. Bei diesem bekannten Verfahren wird eine Schlammsuspension mit beispielsweise ca. 25 % Feststoff mit 30 %iger Salzsäure auf einen pH-Wert von 0,5 - 1,0 eingestellt. Dabei gehen außer den toxischen Metallverbindungen auch die diese an Menge weit übersteigenden Eisen- und Manganverbindungen, u nter Kohlendioxydentwicklung stets vorhandenen Calcium- und Magnesiumcarbonate sowie schwefel-, arsen- und phosphorhaltigen Verbindungen unter Freiwerden der entsprechenden hochgiftigen Wasserstoffverbindungen in Lösung. Nach dem Abtrennen vom Rückstand werden aus der stark sauren und salzreichen Lösung durch Zudosieren einer 20 %igen Calciumhydroxydaufschlämmung zunächst Eisen und Mangan und dann durch weiteres Alkalisieren bis zu einem pH-Wert von 10 die sonstigen, als Oxydhydrate fällbaren Schwermetalle niedergeschlagen.

Durch Einleiten des während des Löseprozesses entwickelten Kohlendioxyds wird das noch verbliebene Cadmium als Carbonat in das gleichzeitig anfallende Calciumcarbonat eingebaut und mit diesem abfiltriert. Filtrate nebst Wässer we rden einem Vorfluter zugeführt. Die Trockensubstanz des zum Deponieren vorgesehenen Säurerückstands enthält laut dem in der genannten europäischen Patentschrift beschriebenen Beispiel an Cadmium 1,6 - 3,4, an Kupfer 38, an Zink 54 und an Mangan und Nickel je 11 ppm. Angaben über den Gehalt an Arsen, Blei und Quecksilber fehlen.

Dieses bekannte Verfahren ist mit erheblichen Nachteilen behaftet. So ist einerseits eine große Menge an konzentrierter Salzsäure erforderlich, die nur zum geringen Teil für das Herauslösen der toxischen Metalle, überwiegend jedoch zum Auflösen der Begleitstoffe verbraucht wird. Andererseits muß bei diesem bekannten Verfahren eine große Menge an Löschkalk zum Einsatz gebracht werden, der nur zum geringen Teil für das Fällen der toxischen Metalle und größtenteils zum Fällen von Eisen und Mangan und zum Neutralisieren und Alkalisieren der salzsauren Lösungen gebraucht wird.

Bei diesem bekannten Verfahren ist es auch erforderlich, Maßnahmen zur Absorption der beim Extrahieren freiwerdenden giftigen und übelriechenden Gase sowie zur Minderung der Belastung der Abwässer mit Calcium - und Magnesiumchlorid zu ergreifen. Zudem ist, bedingt durch die komplizierten Anlagen zum Extrahieren, Abtrennen, Ausfällen und Filtrieren sowie durch die korrosive Aggressivität der salzsauren und chloridhaltigen Lösungen ein beträchtlicher apparativer und betrieblicher Aufwand erforderlich.

Aufgabe der vorliegenden Erfindung ist es, ein Verfahren der hier in Rede stehenden Gattung bereitzustellen, daß auf einfache technische Weise und somit wirtschaftlich durchgeführt werden kann mit dem die toxischen Schwermetallverbindungen nicht selektiv und nacheinander sondern in ihrer Gesamtheit entfernt werden.

Gelöst wird diese Aufgabe durch ein im Anspruch 1 beschriebenes Verfahren. Dieses Verfahren dient zum Dekontaminieren schlammartiger, toxische Metallverbindungen in unterschiedlicher Art und Menge enthaltende Sedimente, wobei man diese toxischen Verbindungen zunächst durch Zusatz hydrophobierbar machender und dann durch Zugabe hydrophobierender Stoffe in flotationsüblicher Weise abtrennt und als Konzentrat abzieht. Dabei ist zu betonen, daß dies in einem Verfahrensschritt bzw. in einem Behandlungsgang vo rgenommen werden kann. Bekanntlich dient die Flotation bei der Aufarbeitung armer Erze der Abtrennung und Anreicherung geringer Schwermetallanteile aufgrund der unterschiedlichen Oberflächenspannung metallhaltiger und metallfreier Partikel des feingemahlenen Erzes, aufgeschlämmt zu einer luftdurchperlten, wässrigen Suspension (man vgl. auch Römpps Chemielexikon, 8. Aufl., Stuttgart 1981, S. 1319 bis 1321). Es handelt sich somit um ein Schwimmaufbereitungsverfahren (Schaum-Schwimmverfahren), bei dem aus feinzerkleinerten Erzen wertvolle Mineralien von ihrer Gangart unter Ausnützung der unterschiedlichen Benetzbarkeit und der einzelnen Gemengeanteile durch z. B. Wasser abgetrennt und angereichert werden, i ndem ein Teil der Mineralien von anhaftenden Luftblasen in den über der Trübe befindlichen Schaum gehoben und mit ihm abgeleitet wird. Die Flotation beruht auf folgenden Tatsachen: Metallsulfide, viele Metalloxyde und andere, in Wasser unlösliche Schwermetallverbindungen werden von hydrophobiernsten Kohlenwasserstoffverbindungen leicht benetzt, während beispielsweise Quarz, Silikat, Phosphat, Sulfat, Carbonate, Halogenide und dgl. von diesen nicht benetzt werden. Zur Verstärkung des Effektes werden beim Flotationsverfahren bestimmte Flotationsmittel zugesetzt. Es handelt sich dabei um Chemikalien, die entweder die Benetzbarkeit der verschiedenen Mineraloberflächen verbessern (sogenannte Sammler oder Kollektoren), ihre Selektivität steuern (Schwimmittel, nämlich sogenannte Drücker, Beleber, pH-Wert-Regler-Dispergier-Entflockungsmittel) o der die Schaumbildung erhöhen (Schäumer).

Als Flotationsmittel können anionenaktive Substanzen und auch kationenaktive Substanzen Anwendung finden. Als Flotationsgas di ent meist Luft.

Die Flotation wird üblicherweise in Freiluftzellen bzw. in Rührwerkzellen technisch durchgeführt.

Liegen mehrere Schwermetalle in unterschiedlicher Bindung, z.B. als Sulfid, Oxid und Carbonat, nebeneinander vor, so werden sie bei der bekannten Flotation nicht zusammen in einem Arbeitsgang sondern getrennt in aufeinanderfolgenden Te ilschritten mittels selektiv wirkender Flotationsmittel sowohl voneinander wie von den Begleitstoffen abgetrennt.

Erfindungsgemäß kann die Abtrennung jedoch in einem Arbeitsgang - wie oben beschrieben - durchgeführt werden.

Das erfindungsgemäße Verfahren kann beispielsweise zur Dekontamination von frischgebaggerten fluviatilem Schlamm, beispielsweise Hafenschlick, eingesetzt werden. Ein derartiger Schlamm besteht üblicherweise zu etwa drei Fiertel aus Wasser und zu einem Viertel aus Feststoffen. Diese enthalten je nach der Entnahmestelle 20 - 55 % nahezu schwermetallfreien Kies und Sand und 35 - 80 % Fein schlick, bestehend aus 10 - 20 % organischen Stoffen natürlicher und anthropogener Herkunft, aus 5 - 10 % Carbonaten un d silikaten und aus 75 - 85 % Schluff- und Feinton. Der Feinschlick enthält fast die gesamte Menge der toxischen Metallverbindungen, teils überwiegend adsorptiv angereichert, teils mineralisch oder komplex gebunden, teils frei vorliegend.

Nach L. Tent u. S. Wild (Ergebnisse aus den Sedimentuntersuchungen im Hamburger Hafen - Schwermetalle - , Heft 2 des Baggergutuntersuchungsprogrammes der Freien und Hansestadt Hamburg, Februar 1986) enthielt der Feststoffanteil in 460 in den Jahren 1981/83 entnommenen Schlickproben:

| Arsen | 5,2 | bis | 334 ppm, | im Mittel | 43 ppm |
|---|---|---|---|---|---|
| Blei | 10,5 | " | 1086 ", | " " | 200 " |
| Cadmium | 0,15 | " | 54 ", | " " | 10 " |
| Chrom | 22,6 | " | 334 ", | " " | 138 " |
| Kupfer | 11,6 | " | 4765 ", | " " | 408 " |
| Nickel | 18,0 | " | 172 ", | " " | 58 " |
| Quecksilber | 0,15 | " | 31 ", | " " | 8 " |
| Zink | 69,0 | " | 6600 ", | " " | 1418 " |
| Summe | 137 | bis | 13376 ppm, | im Mittel | 2283 ppm |

Diese Schadstoffe sind anionisch gebunden, z.B. als Sulfide, Oxide, Carbonate und Oxyhydrate oder organisch komplexiert. Zum einheitlichen Ansprechen werden daher diesen Sedimenten, die vorzugsweise zuvor in eine wässrige Suspension überführt werden, nach dem erfindungsgemäßen Verfahren vorzugsweise Agenzien hinzugesetzt, welche in Wasser je nach Zusatz Sulfid- oder Hydroxyl/Carbonat-Ionen bilden.

Nach einer bevorzugten Ausführungsform würden somit den zu dekontaminierenden Sedimenten vor der Flotation Agenzien zugesetzt, die in Wasser Sulfidionen abgeben. Dadurch werden die austauschbaren und organisch gebundenen Metallkationen sowie die als Oxyd und/oder Carbonat gebundenen Metalle in sulfidische Verbindungen überführt. Die Sulfidionen wandeln nämlich die nichtsulfidischen Verbindungen

EP 0 332 958 A1

ganz oder in der Oberfläche in Sulfide um, die dann mittels eines auf Sulfide ansprechenden Flotationsmittels in bekannter Weise hydrophobiert und aufschäumbar gemacht werden.

Nach einer bevorzugten Ausführungsform setzt man folgende Agenzien ein: Natriumsulfid (Na$_2$S), Natriumhydrogensulfid (NaHS), Ammoniumhydrogensulfid (NH$_4$•HS), Ammoniumpolysulfid (NH$_4$)$_2$S$_n$, Thioacetamid (CH$_3$CS•NH$_2$) und/oder Ammoniumthiocarbamat (OCS•NH$_2$)NH$_4$.

Der Bedarf hängt ab von dem Gehalt des Schlicks an sulfidierbaren Verbindungen. Bezogen auf den Schwefelanteil des Sulfidiermittels (S$^{2-}$) sind je kg Feststoff vorzugsweise 1,5 bis 3,0 g (S$^{2-}$) erforderlich; dies bedeutet beispielsweise 5 bis 10 g NaHS.3H$_2$O.

Als Flotationsmittel setzt man zweckmäßigerweise sogenannte Sammler ein. Als Sammler dienen vorzugsweise die der Sulfhydrylgruppe zugehörigen Xanthate und Thiocarbanilide und, bedingt durch die Feinstschlämme in der Flotationstrübe, Schaumstabilisatoren.

Nach einer weiterhin bevorzugten Ausführungsform versetzt man die zu dekontaminierenden Sedimente vor der Flotation mit Agenzien, die in Wasser Hydroxyl- und/oder Carbonationen abgeben. Dadurch werden die austauschbaren und organisch gebundenen Metallkationen sowie die sulfidischen Metallverbindungen in den zu flotierenden Sedimenten bzw. in der zu flotierenden Suspension zu den entsprechenden Oxydhydraten und Carbonaten umgesetzt. Diese Hydroxyl-und/oder Carbonationen bildenden Agenzien wandeln somit die nicht oxidischen Schwermetallverbindungen, soweit sie reaktionsfähig sind, zumindest durch oberflächenändernde Einwirkung in Oxidhydrate, Oxysalze und Carbonate um.

Vorzugsweise setzt man letztere Agenzien in einer derartigen Menge ein, daß der ursprüngliche pH-Wert von etwa 6 auf 8,0 - 10,5 angehoben wird. Dies bewirkt, daß bei dem angeführten Beispiel außer dem relativ reichlich vorhandenen Blei, Kupfer und Zink auch Spuren von Cadmium und Quecksilber ausgefällt werden. Arsenverbindungen und Phosphate werden in die gleichzeitig ausfallenden Mangan-und Magnesiumhydroxyde eingebaut und mit diesen flotierbar gemacht.

Vorzugsweise setzt man ein Gemisch aus Natriumhydroxyd und Natriumcarbonat im Molverhältnis von 2:1 ein, d.h. 2 Mol Natriumhydroxyd (80 g) pro 1 Mol Natriumcarbonat (106 g). Dieses Gemisch setzt man vorzugsweise in 10 bis 15 %iger Lösung ein. Die zugegebene Menge hängt ab vom Gehalt des Schlicks an toxischem Metallen und den als Oxydhydraten mitausfallenden Eisen- und Manganverbindungen. Zweckmäßigerweise setzt man 5 bis 10 g des oben beschriebenen Gemisches pro kg Feststoff ein.

Als Flotationsmittel werden übliche Sammler zur Anwendung gebracht. Als Sammler werden vorzugsweise zur Oxyhydrylgruppe gehörende Flotationsmittel, vorzugsweise Fettsäuren, ggf. in Kombination mit Tallölen und ggf. zusammen mit Schaumstabilisatoren eingesetzt.

Da ein Teil der toxischen Metalle als nicht in Oxyverbindungen umwandelbare Sulfide vorliegt, werden nach einer bevorzugten Ausführungsform des vorliegenden Verfahrens zu deren Erfassung dem Oxyhydrylsammler noch ein Xanthat beigegeben, zweckmäßigerweise in einer Menge von 30 bis 50% der Menge des Oxyhydrylsammlers

Der beim Sulfhydryl- sowie beim Oxyhydrylflotieren aufschwimmende, schwermetallhaltige Schaum wird in bekannter Weise abgezogen und der hüttenmännischen Verarbeitung zugeführt.

Der dekontaminierte Bodenkörper kann ohne weiteres Auswaschen und ohne Gefahr für das Grundwasser und die Umwelt deponiert, landbaulich und landwirtschaftlich genutzt oder für keramische Zwecke verwendet werden. Die nur noch einen Bruchteil der zugesetzten sulfidierenden oder hydroxylierenden Mittel enthaltenden Abwässer des Flotationsprozesses können, soweit sie nicht im Kreisprozeß unter entsprechender Kontrolle geführt werden, in den Vorfluter eingeleitet werden. Verglichen mit dem eingangs beschriebenen Verfahren, bei dem mit Säure extrahiert wird, hat die erfindungsgemäße Dekontaminierung durch das erfindungsgemäße Verfahren bzw. durch die beschriebene Art der Flotation folgende Vorteile.

Die Abrennung der toxische von den nichttoxischen Feststoffen geht in einer rein wässrigen Suspension ohne Säure und ohne die damit verbundenen Neutralisations-, Zentrifugier- und Filtrationsmaßnahmen vor. Damit entfallen der von den nichttoxischen Bestandteilen bedingte Verbrauch an Säure und Kalk, die Vernichtung der bei der Säureextraktion freiwerdenden giftigen Gase, die Entsorgung der chloridhaltigen Abwässer und die Verwendung salzsäure- und chloridbeständiger Behälter und Rohwerkstoffe. Durch das erfindungsgemäße Verfahren werden die toxischen Metalle bis auf einen in das Kristallgitter der mineralischen Bestandteile des Schlicks eingebauten Restgehalt erfaßt, der aber auch den innerhalb der Deponie einwirkenden Faktoren widersteht und somit ökologisch unbedenklich ist.

Diese nicht unterschreitbaren Gehalte liegen im natürlichen, mineralischen Feststoff, z.B. Ton,

| für Arsen | um | 9 ppm, |
|-----------|-----|--------|
| für Blei | " | 20 ", |
| für Cadmium | " | 0,3 ", |
| für Kupfer | " | 56 ", |
| für Quecksilber | " | 0,4 ", |
| für Zink | " | 90 ", |

Nach oben werden die zulässigen Gehalte begrenzt durch die für Kulturböden geltenden, maximalen Bodengrenzwerte der Abfall- und Klärschlammverordnung (AbfKlärV), § 4, vom 25.4.1982. Bezogen auf den Feststoff liegen diese Grenzwerte

| für Arsen | bei max. | 20 ppm, |
|-----------|----------|---------|
| " Blei | " " | 100 ", |
| " Cadmium | " " | 3 ", |
| " Kupfer | " " | 100 ", |
| " Quecksilber | " " | 2 ", |
| " Zink | " " | 200 ", |

wobei die Cadmium- und Quecksilbergehalte der AbfKlärV zwingend einzuhalten sind.

Die Dekontaminierung muß daher die Verminderung der toxischen Metallgehalte unter die Bodengrenzwerte in möglichster Annäherung an die natürlichen, mineralischen Grenzwerte zum Ziele haben.

Es wurde gefunden, daß durch Flotieren ohne vorangehendes Sulfidieren odr Hydroxylieren die qualitativ und quantitativ unterschiedlichen toxischen Metallverbindungen nicht gleichzeitig und gleicherweise, diese meist sogar nicht erreichend, gesenkt werden, während das erfindungsgemäße, auf schlammige Sedimente unterschiedlicher Herkunft und Zusammensetzung anwendbare Verfahren de Dekontaminierung durch Flotieren nach vorangegangenem Sulfidieren oder Hydroxylieren bis auf ökologisch unbedenkliche Restgehalte ermöglicht.

Beispiel

Beispiel 1

50 kg stichfester Hafenschlick, bestehend aus 56 % Wasser und 44 % Feststoff mit 18 % Sand, 15 % organischen und 67 % tonigen Substanzen wurden mit Wasser zu einer 15 % Feststoff enthaltenden Suspension aufgeschlämmt und unter Zugabe von 10 g Kalium-Hexylxanthat als Sammler, 5 g Alkylpolyglykol als Schäumer und 5 g Tylose als Drücker der Eisen- und Manganverbindungen in bekannter Weise flotiert. Der an toxischen Metallen relativ reichen, aber quecksilberfreien Schlicksuspension wurden vor dem Flotieren 10 mg Quecksilber je kg Feststoff als wässrige Quecksilber (2)-chlorid-Lösung zugesetzt. Ferner wurde eine identische Suspension nach Zugabe von 100 g Ammoniumhydrogensulfid $(NH_4)HS \bullet 3H_2O$ flotiert.

Tabelle 1

| Flotationsergebnisse vor und nach dem Sulfidieren gemäß Ansatz 1 | | | |
|---|---|---|---|
| Toxische Metalle | | | |
| im unbehandelten Feststoff | | in den Flotationsrückständen | |
| | | ohne Sulfidieren | nach Sulfidieren (erfindungsgemäß) |
| Metall | ppm | ppm | ppm |
| Arsen | 118 | 85 | 12 |
| Blei | 380 | 278 | 43 |
| Cadmium | 24 | 15 | 1,2 |
| Kupfer | 981 | 415 | 62 |
| Quecksilber | 10 | 3,9 | 0,6 |
| Zink | 2670 | 1562 | 121 |
| Summe | 4183 | 2359 | 240 |

Ohne Sulfidieren geht der Gehalt an toxischen Metallen auf 56 % zurück. Sämtliche Einzelwerte liegen weit über den Bodengrenzwerten.

Nach Sulfidieren geht der Gehalt auf 6 % zurück. Sämtliche Einzelwerte liegen erheblich unter den Bodengrenzwerten nahe den mineralischen Grundgehalten.

Beispiel 2

62,5 kg stichfester Hafenschlick, bestehend aus 47 % Wasser und 53 % Feststoff mit 29 % Sand, 7 % organischen und 64 % tonigen Substanzen wurden mit Wasser zu einer 12 % Feststoff enthaltenden Suspension aufgeschlämmt.

Nach Zugabe der gleichen Mengen an Sammler, Schäumer und Drücker wie in Beispiel 1 sowie von 5 mg Quecksilber je kg Feststoff wurde die an toxischen Metallen relativ arme Suspension, ferner eine identische Suspension nach Zugabe von 100 g Natriumhydrogensulfid (NaHS•3 $H_2O$) flotiert.

Tabelle 2

| Flotationsergebnisse vor und nach dem Sulfidieren gemäß Ansatz 2 | | | |
|---|---|---|---|
| Toxische Metalle | | | |
| Im unbehandelten Feststoff | | in den Flotationsrückständen | |
| | | ohne Sulfidieren | nach Sulfidieren (erfindungsgemäß) |
| Metall | ppm | ppm | ppm |
| Arsen | 45 | 31 | 6,5 |
| Blei | 110 | 83 | 25 |
| Cadmium | 11 | 3,1 | 1,3 |
| Kupfer | 220 | 141 | 61 |
| Quecksilber | 5 | 3,5 | 0,7 |
| Zink | 1050 | 575 | 145 |
| Summe | 1441 | 837 | 240 |

Ohne Sulfidieren geht der Gehalt an toxischen Metallen auf 58 % zurück. Außer Blei liegen die Einzelwerte über den Bodengrenzwerten.

Nach Sulfidieren geht der Gehalt auf 17 % zurück. Sämtliche Einzelwerte liegen unter den Bodengrenzwerten nahe den mineralischen Grundgehalten. Da man bei dem geringhaltigen Schlick in die Nähe des mit etwa 150 ppm zu veranschlagenden, nicht mehr zugänglichen Grundgehaltes kommt, verbleiben an erfaßbaren toxischen Metallen nach Abzug von je 150 ppm als Summe 1291 ppm, als Rückstandsgehalt ohne Sulfidieren 687 und nach Sulfidieren 90 ppm. Daraus ergeben sich Abnahmen auf 53 statt auf 58 % bzw. auf 7 statt auf 17 %.

Beispiel 3

50 kg des im Beispiel 1 eingesetzten stichfesten Hafenschlicks wurden nach Aufschlämmen zu einer 15 % Feststoff enthaltenden Suspension unter Zugabe von 10 g Oleylaminacetat als Sammler und 15 g einer 10 g Tallöl und 5 g Ölsäureoxethylat enthaltenden Emulsion als kombinierter Sammler und Schäumer in bekannter Weise flotiert. Wie in Beispiel 1 wurden 10 mg Quecksilber je kg Feststoff vor der Flotation zugemischt. Ferner wurde eine identische Suspension nach Zugabe von 150 g eines Gemisches aus 80 g Natriumhydroxid und 106 g Natriumcarbonat zwecks Hydroxylierung flotiert.

Tabelle 3: Flotationsergebnisse vor und nach dem Hydroxylieren gemäß Ansatz 3

Toxische Metalle

|  | im unbehandelten Feststoff | in den Flotationsrückständen | |
|---|---|---|---|
|  |  | ohne Hydroxylieren | nach Hydroxylieren (erfindungsgemäß) |
| Metall | ppm | ppm | ppm |
| Arsen | 118 | 106 | 18 |
| Blei | 380 | 281 | 75 |
| Cadmium | 24 | 18 | 1,9 |
| Kupfer | 981 | 327 | 83 |
| Quecksilber | 10 | 4,3 | 0,8 |
| Zink | 2670 | 1675 | 165 |
| Summe | 4183 | 2411 | 344 |

Ohne Hydroxylieren geht der Gehalt an toxischen Metallen auf 58 % zurück. Sämtliche Einzelwerte liegen über den Bodengrenzwerten. Nach Hydroxylieren geht der Gehalt auf 8 % zurück. Sämtliche Einzelwerte liegen unter den Bodengrenzwerten.

Beispiel 4

62,5 kg des im Beispiel 2 eingesetzten stichfesten Hafenschlicks wurden mit Wasser zu einer 12 % Feststoff enthaltenden Suspension aufgeschlämmt. Wie im Beispiel 2 wurden 5 mg Quecksilber je kg Feststoff vor der Flotation zugemischt. Als Flotiermittel wurden der Suspension außer 5 g Oleylaminacetat als Sammler und 8 g einer 10 g Tallöl und 5 g Ölsäureoxethylat enthaltenden Emulsion als Sammler und Schäumer noch 5 g Kalium-Hexylxanthat zugegeben, um auch die nicht hydroxylierbaren Sulfide zu erfassen.

Ferner wurde eine identische Suspension nach Zugabe von 170 g des Hydroxyliergemisches flotiert.

### Tabelle 4: Flotationsergebnisse vor und nach dem Hydroxylieren gemäß Ansatz 4

|  | im unbehandelten Feststoff | in den Flotationsrückständen ohne Hydroxylieren | nach Hydroxylieren (erfindungsgemäß) |
|---|---|---|---|
| Metall | ppm | ppm | ppm |
| Arsen | 45 | 23 | 12 |
| Blei | 110 | 57 | 31 |
| Cadmium | 11 | 6 | 1,1 |
| Kupfer | 220 | 80 | 49 |
| Quecksilber | 5 | 2,9 | 0,9 |
| Zink | 1050 | 530 | 115 |
| Summe | 1441 | 699 | 209 |

Ohne Hydroxylieren geht der Gehalt an toxischen Metallen auf 49 % zurück. Hinsichtlich der Einzelmetalle liegen die Werte für Blei und Kupfer nicht nur unter denen der Bodengrenzwerte, sondern unterschreiten auch die ohne Xanthat erhaltenen der Tabelle 3.

Durch das xanthatverstärkte Hydroxylieren wird der Gesamtgehalt des Rückstandes auf 15 % gesenkt. Sämtliche Einzelwerte unterschreiten die Bodengrenzwerte bis nahe den natürlichen Grundgehalten. Wird der mit etwa 150 ppm zu veranschlagende Grundgehalt analog zum Beispiel 2 berücksichtigt, so verbleiben nach dessen Abzug als Summe 1291 ppm, als Rückstandsgehalt ohne Hydroxylieren 549 ppm, nach Hydroxylieren 59 ppm und somit 42 statt 49 % und 5 statt 15 %.

## Ansprüche

1. Verfahren zur Dekontaminierung von Metallverbindungen enthaltenden, schlammartigen Sedimenten, dadurch gekennzeichnet, daß man die Sedimente mit Agenzien versetzt, welche die Metallverbindungen zumindest teilweise hydrophobieren und somit flotierbar machen, und daß man die Metallverbindungen in flotationsüblicher Weise in einem Verfahrensschritt von den Sedimenten trennt und als Konzentrat abzieht.

2. Verfahren nach Anspruch 1, dadurch gekennzeichnet, daß man die Sedimente zuvor zu einer wässrigen und insbesondere 75 - 90 %igen wässrigen Suspension aufschlämmt.

3. Verfahren nach Anspruch 1 oder 2, dadurch gekennzeichnet, daß man die zu flotierenden Sedimente mit Sulfidionen abgebenden Agenzien und zur Durchführung der Flotation mit üblichen, auf Sulfide ansprechenden Flotationsmitteln versetzt.

4. Verfahren nach Anspruch 3, daß man als Sulfidionen abgebende Agenzien Natriumsulfid ($Na_2S$) Natriumhydrogensulfid (NaHS), Ammoniumhydrogensulfid ($NH_4 \bullet HS$), Ammoniumpolysulfid $H(NH_4)_2S_n$, Thioacetamid ($CH_3CS \bullet NH_2$) und/oder Ammoniumthiocarbamat ($OCS \bullet NH_2$) $NH_4$ einsetzt.

5. Verfahren nach Anspruch 3 oder 4, dadurch gekennzeichnet, daß man die Sulfidionen abgebenden Agenzien, bezogen auf den Schwefelanteil ($S^{2-}$) in einer Menge von 1,5 - 3,0 g ($S^{2-}$) pro kg Feststoff einsetzt.

6. Verfahren nach mindestens einem der Ansprüche 3 bis 5, dadurch gekennzeichnet, daß man als Flotationsmittel sogenannte Sammler und insbesondere die der Sulfhydrylgruppe zugehörigen Xanthate und Thiocarbanilide und/oder Schaumstabilisatoren einsetzt.

7. Verfahren nach Anspruch 1 oder 2, dadurch gekennzeichnet, daß man die zu flotierende Suspension mit Hydroxyl- und/oder Carbonationen abgebenden Agenzien und zur Durchführung der Flotation mit üblichen, auf diese Verbindungen ansprechenden Flotationsmitteln versetzt.

8. Verfahren nach Anspruch 7, dadurch gekennzeichnet, daß man die Hydroxyl- und/oder Carbonationen freigebenden Agenzien in einer solchen Menge zugibt, daß der pH-Wert der eingesetzten Sedimente auf 8,0 - 10,5 erhöht wird.

9. Verfahren nach Anspruch 7 oder 8, dadurch gekennzeichnet, daß man als Hydroxyl- und/oder Carbonationen freisetzende Agenzien ein Gemisch aus Natriumhydroxyd und Natriumcarbonat in einem Molverhältnis von 2:1 im insbesondere 10 - 15 %iger wässriger Lösung einsetzt, wobei man insbesondere 5 - 10 g des obigen Gemisches pro kg Feststoff zur Anwendung bringt.

10. Verfahren nach mindestens einem der Ansprüche 7 bis 9, dadurch gekennzeichnet, daß man als Flotationsmittel sogenannte Sammler, die zur Oxyhydrylgruppe gehören, insbesondere ungesättigte Fettsäuren ggf. in Kombination mit Tallölen und ggf. zusammen mit Schaumstabilisatoren einsetzt.

11. Verfahren nach mindestens einem der Ansprüche 7 bis 10, daß man zusätzlich einen Sammler auf Xanthatbasis zugibt.

10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PUBLIKATIEREEKS 'AFVALSTOFFEN', Nr. 11, 1985, 146 Seiten, Staatsuitgeverij, Den Haag, NL; W.J. VAN GEMERT et al.: "Onderzoek reiniging baggerslib" * Seite 30, Kapitel 4.2 * --- | 1,3 | B 09 B 5/00<br>B 03 D 1/00<br>B 09 B 3/00 |
| X | TECHNISCH WEEKBLAD, 10. Juni 1983, Uitg. Misset, Doetinchem, NL; "Vuile grond schoon met water en zeep" * Insgesamt * --- | 1 | |
| X | NEDERLANDSE CHEMISCHE INDUSTRIE, 12. Dezember 1984, Seite 36, Samson en Sythoff, Alphen a/d Rijn, NL; "Schuimscheiding-techniek goedkope manier om bodem schoon te maken" * Seite 36 * --- | 1-3 | |
| Y,P | PATENT ABSTRACTS OF JAPAN, Band 12, Nr. 230 (C-508)[3077], 29. Juni 1988, Seite 69 C 508; & JP-A-63 23 798 (TAJIMISHI) 01-02-1988 * Zusammenfassung * --- | 1,2 | RECHERCHIERTE SACHGEBIETE (Int. Cl.4) |
| Y | DE-A-3 719 931 (MTARRI REMEDIAL RESOURCES) * Ansprüche 1-4,7 * --- | 1,2,7,8 ,10,11 | C 02 F<br>B 03 D<br>B 09 B |
| Y | EP-A-0 178 009 (HEIDEMIJ UITVOERING) * Zusammenfassung; Seite 3, Zeilen 19-28; Seite 5, Zeilen 14-35; Seite 6, Zeile 32 - Seite 7, Zeile 3; Ansprüche 12,14 * --- | 7,8,10, 11 | |
| A | FR-A-1 554 204 (ARBITER UND HINN) * Seite 1, rechte Spalte, Zeilen 4-9 * ---         -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 10-05-1989 | KASPERS H.M.C. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | HANDBOEK BODEMSANERINGSTECHNIEKEN, 1. Ausgabe, 1983, Seiten 33-34, Kapitel 4.9.2, Staatsuitgeverij, Den Haag, NL; "Extractie-schuimscheiding (flotatie)" * Seiten 33-34 * --- | 1 | |
| A | A.F. TAGGART: "Handbook of mineral dressing", Abteilung 12, 1945, Seiten 12-01-12-15, Chapman & Hall, London, GB; "Flotation" * Seite 12-01, die letzte 2 Zeilen - Seite 12-02; Seite 12-05; Seite 12-07: "Xanthates" - Seite 12-09; Seite 12-11: "Organic Sulphides" - Seite 12-14 * ----- | 1,2,6,7 ,10,11 | |

**RECHERCHIERTE SACHGEBIETE (Int. Cl.4)**

Der vorliegende Recherchenbericht wurde für alle Patentansprüche erstellt

| Recherchenort | Abschlußdatum der Recherche | Prüfer |
|---|---|---|
| DEN HAAG | 10-05-1989 | KASPERS H.M.C. |

EPO FORM 1503 03.82 (P0403)